# EUROPÄISCHE PATENTSCHRIFT

(11) **EP 1 500 580 B1**
(45) Veröffentlichungstag und Bekanntmachung des Hinweises auf die Patenterteilung: **30.07.2008**
(21) Anmeldenummer: 04015014.6
(22) Anmeldetag: 25.06.2004
(51) Int. Cl.: B62D 61/12, B60G 9/02

(54) **Vorrichtung zum Liften und Senken einer Fahrzeugachse**
Apparatus for raising and lowering a vehicle axle
Dispositf pour relever et abaisser l'essieu d'un véhicule

(30) Priorität: 24.07.2003 DE 10333757
(43) Veröffentlichungstag der Anmeldung: 26.01.2005
(73) Patentinhaber: MAN Nutzfahrzeuge Aktiengesellschaft, 80995 München (DE)
(72) Erfinder: Hörmann, Robert, 85461 Bockhorn (DE); Nickels, Thomas, 81541 München (DE); Schmitt, Peter, 81541 München (DE)

(56) Entgegenhaltungen:
- EP-A- 0 284 572
- EP-A- 0 376 834
- EP-A- 1 180 474
- DE-U1- 29 801 179

## Beschreibung

Die Erfindung betrifft eine Vorrichtung zum Liften und Senken einer Fahrzeugachse, insbesondere einer Vorlauf- und Nachlaufachse von Nutzfahrzeugen wie LKW oder Bussen, die oben über einen Dreieckslenker und unten über Längslenker an einem Fahrzeugrahmen angelenkt und mittels Federn und Stoßdämpfern gegenüber diesem abgestützt ist, wobei zum Liften und Senken der Fahrzeugachse ein Liftbalg vorgesehen ist, der unten an einem rahmenfesten Liftbalgträger und oben mittelbar gegenüber der liftbaren Fahrzeugachse abgestützt ist.

Die allgemein aus dem Stand der Technik bekannten Vorrichtungen zum Liften und Senken von Fahrzeugachsen weisen außer einer Verbindung des Liftbalgs mit einem Fahrzeugrahmen auch eine Verbindung mit einem Dreieckslenker auf. Eine solche Liftvorrichtung wird beispielsweise in der EP 1 180 474 A2 beschrieben. Nachteilig bei einem solchen am Dreieckslenker angebundenen Liftbalg ist jedoch, dass der Liftbalg über einen vom Dreieckslenker gebildeten Hebelarm auf die zu liftende Fahrzeugachse wirkt. Durch den Hebelarm entsteht ein ungünstiges Übersetzungsverhältnis, so dass der Liftbalg mit einem relativ hohen Luftdruck zum Liften der Fahrzeugachse beaufschlagt werden muss. Der erforderliche hohe Luftdruck stellt große Anforderungen an das Material des Liftbalges. Da der Dreieckslenker bei gelifteter Fahrzeugachse mit der Horizontalen einen bestimmten Winkel einschließt, besteht für den am Dreieckslenker angebundenen Liftbag bei gefilteter Fahrzeugachse eine Einknickgefahr. Durch dieses unerwünschte Einknicken wird das Material des Liftbalgs im Laufe der Zeit brüchig, so dass der Liftbalgundicht werden und platzen kann. Dann ist ein Liften der Fahrzeugachse nicht mehr möglich.

Aus der DE 298 01 179 U1 ist eine Nachlaufachse für Lastkraftwagen bekannt, welche eine aufgesetzte Adaptionsbrücke aufweist. Diese ist mit einem abgewinkelten mittigen Tragarm für einen Befestigungsflansch der Lifteinrichtung und mit endseitigen abgewinkelten Tragarmen mit Stützflanschen für die Federbälge der Achsfederung versehen. Aus der EP 0 284 572 A2 ist eine liftbare Achse eines Fahrzeuges bekannt, die einen mit der liftbaren Achse verbundenen Luftfederbalg aufweist.

Die Erfindung hat die Aufgabe, die Lebensdauer des mindestens einen Liftbalges zu erhöhen und seine Funktion störungsfrei sicherzustellen.

Die Erfindung löst die gestellte Aufgabe gemäß Anspruch 1 durch eine Vorrichtung der eingangs genannten Art, bei der erfindungsgemäß der Liftbalg oben an einem an der liftbaren Fahrzeugachse befestigten Halter abgestützt ist. Der Halter ist dabei außermittig, je nach dem zur Verfügung stehenden Bauraum, an der Fahrzeugachse angebunden. Somit ermöglicht die erfindungsgemäße Konstruktion eine flexible Anpassung der Anbindung des Verbindungselementes an der Fahrzeugachse. Der Halter weist einen Verbindungsarm auf und erstreckt sich somit mit seinem Verbindungsarm vom oberen Ende des Liftbalgs bis herunter zur Fahrzugachse, wo der Verbindungsarm an der liftbaren Fahrzeugachse angeschweißt und/oder angeschraubt sein kann. Dies ist eine einfache und zuverlässige Konstruktion bei weniger stark gekröpften liftbaren Fahrzeugachsen. Des Weiteren ist unabhängig von der Ausführungsform der Dreieckslenker am Halter angelenkt. Durch diese einfache und sehr stabile Konstruktion kann zukünftig der bisher erforderliche Hebelarm entfallen, um die Fahrzeugachse zu liften. Jetzt stimmen die Wirkrichtungen des Liftbalgs und die Liftrichtung der liftbaren Fahrzeugachse überein. Weil der Hebelarm zum Liften der Fahrzeugachse zukünftig entfällt, besteht für den einen Liftbalg auch nicht mehr die Gefahr des unerwünschten Einknickens, wodurch das Material des mindestens einen Liftbalges wesentlich geschont wird. Weil die liftbare Fahrzeugachse mit einer geringeren Kraft als bisher geliftet werden kann, kann der eine Liftbalg zukünftig kleiner dimensioniert und zum Liften mit einem geringeren Luftdruck beaufschlagt werden. Deshalb können an das Material für den einen Liftbalg zukünftig geringere Anforderungen gestellt werden. Der eine Liftbalg wird also durch die erfindungsgemäße Konstruktion erheblich geringer beansprucht, wodurch seine Lebensdauer deutlich erhöht und eine störungsfreie Funktion sichergestellt wird. Dadurch, dass der eine Liftbalg zum Liften der Fahrzeugachse zukünftig mit einem geringeren Luftdruck beaufschlagt werden kann, kann auch die rahmenseitige Verbindung schwächer dimensioniert werden, wodurch Material und Gewicht eingespart wird. Da es sich bei der Fahrzeugachse auch um eine Vorlauf- oder um eine Nachlaufachse handeln kann, lässt sich die erfindungsgemäße Vorrichtung unabhängig von der Art der jeweiligen Fahrzeugachse bei jedem Nutzfahrzeug, das eine liftbare Fahrzeugachse aufweist, realisieren. Vorteilhafterweise kann der Liftbalgträger an mindestens einem Rahmenlängsträger und/oder an mindestens einem Rahmenquerträger befestigt sein. Durch eine Befestigung an beiden Rahmenlängsträgern wird die Stabilität und auch die Festigkeit der Liftbalgträger erhöht, so dass die Liftbalgträger, um Material zu sparen, schwächer dimensioniert werden können.

Aus Platzgründen ist es häufig erforderlich, die liftbare Fahrzeugachse zu kröpfen, um Einbauraum für bestimmte Komponenten wie beispielsweise eine Antriebswelle zu schaffen. Bei sehr stark gekröpften liftbaren Fahrzeugachsen ist daher der Halter in einer alternativen Ausführungsform gemäß Anspruch 1 mittels einer an der liftbaren Fahrezugachse angebrachten Befestigungseinrichtung mit der liftbaren Fahrzeugachse verbunden. Dabei kann in weiterer Variante die Befestigungseinrichtung eine Befestigungsplatte mit daran angebrachten Wangen aufweisen, wobei die Wangen an der liftbaren Fahrzeugachse anliegen. Auf diese Weise können Querkräfte, die von einem an dem Halter angelenkten Dreieckslenker stammen, auf die Fahrzeugachse übertragen werden, so dass Schrauben zur Befestigung des Halters an der Befestigungsplatte bei einer Querkraftbelastung deutlich entlastet werden.

Die Wangen an der Befestigungsplatte können die liftbare Fahrzeugachse umgreifen. Dadurch wird eine formschlüssige Verbindung zwischen den Wangen und der liftbaren Fahrzeugachse hergestellt. Diese formschlüssige Verbindung stellt eine optimale Kraftübertragung in Quer- und Längsrichtung vom Dreieckslenker auf die liftbare Fahrzeugachse sicher.

Abhängig vom jeweils zur Verfügung stehenden Bauraum kann der Halter in Fahrtrichtung vor oder hinter der zu liftenden Fahrzeugachse angeordnet sein. Folglich kann die erfindungsgemäße Konstruktion auch bei nur geringem zur Verfügung stehendem Bauraum realisiert werden.

Ebenfalls aus Gründen einer Gewichts- und Kostenersparnis kann der Liftbalgträger mit einem Stoßdämpferhalter kombiniert werden.

Aus Kosten- und Stückzahlgründen können der Halter und/oder der Liftbalgträger als eine Guss- oder als eine Schweißkonstruktion ausgeführt sein. Es ist also auch möglich, den Halter als eine Gusskonstruktion und den Liftbalgträger als eine Schweißkonstruktion oder umgekehrt auszuführen.

Ferner betrifft die Erfindung eine Fahrzeugachse, insbesondere für ein Nutzfahrzeug wie LKW oder Busse, die erfindungsgemäß eine Vorrichtung nach einem der Ansprüche 1 bis 8 aufweist.

In einer Weiterbildung der Erfindung ist die Fahrzeugachse eine gelenkte oder eine nicht gelenkte Fahrzeugachse.

Nachfolgend wird ein Ausführungsbeispiel der erfindungsgemäßen Vorrichtung anhand der beiliegenden Zeichnung näher erläutert.

(Weiter auf Seite 4 der ursprünglichen Beschreibung in Fassung vom 22.07.2003)

Im Einzelnen zeigen:
- Fig. 1: eine Vorderansicht auf ein Fahrwerk mit einer liftbaren Fahrzeugachse,
- Fig. 2: eine perspektivische Ansicht auf das Fahrwerk aus Fig. 1 und
- Fig. 3: eine Draufsicht auf ein Fahrwerk mit einer weiteren Ausführungsform eines Halters.

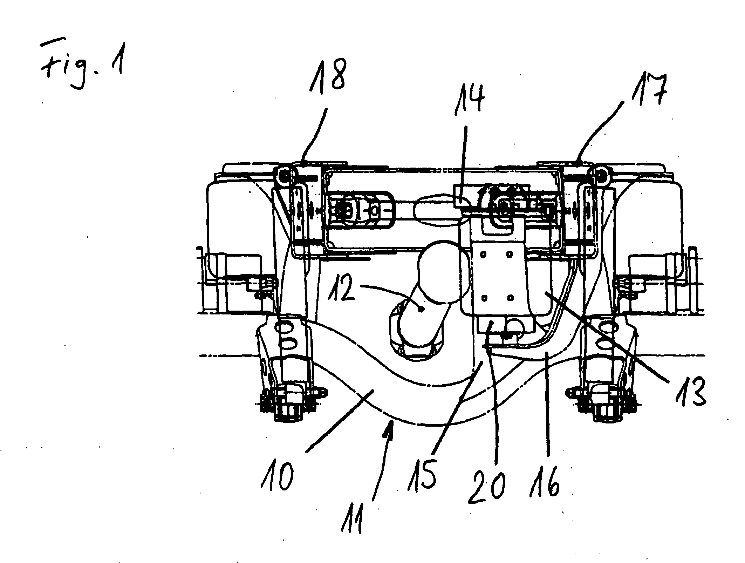

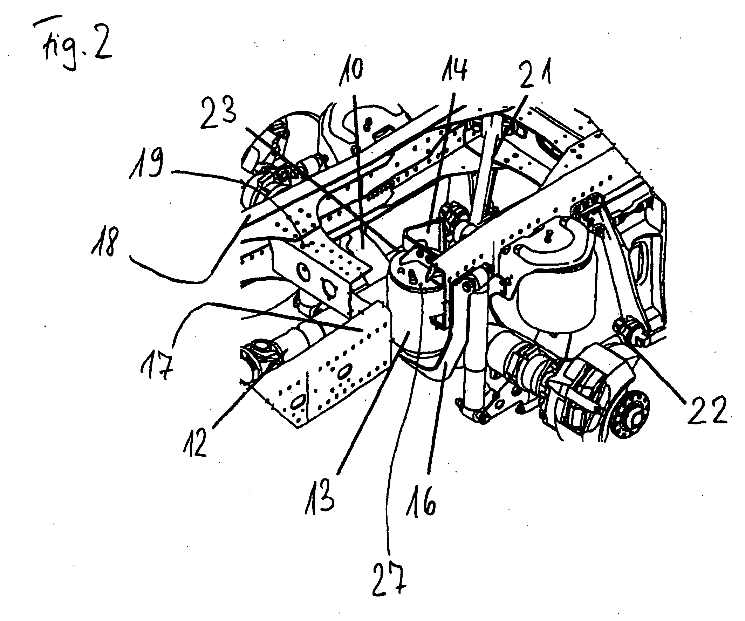

Die Fign. 1 und 2 zeigen eine liftbare Fahrzeugachse 10, die mit einer Kröpfung 11 versehen ist, um Bauraum für eine Antriebswelle 12 zu schaffen. Die Fahrzeugachse 10 kann durch einen Liftbalg 13 geliftet oder gesenkt werden. Der Liftbalg 13 ist achsseitig mit einem einen Verbindungsarm 15 aufweisenden Halter 14 mit der Fahrzeugachse 10 verbunden. Somit erstreckt sich der Halter 14 mit seinem Verbindungsarm 15 vom oberen Ende des Liftbalgs 13 herunter bis zur Fahrzeugachse 10, wo der Verbindungsarm 15 angeschweißt und/oder angeschraubt sein kann. Zur besseren Montage ist zwischen dem Liftbalg 13 und dem Halter 14 eine runde Platte 27 angeordnet. Der Liftbalg 13 ist außerdem mit einem rahmfesten Liftbalgträger 16 verbunden. Der Liftbalgträger 16 ist an einem Rahmenlängsträger 17 befestigt. In einer anderen hier nicht näher dargestellten Ausführungsform ist es auch möglich, dass der Liftbalgträger 16 zusätzlich auch an einem Rahmenlängsträger 18 und/oder an einem Rahmenquerträger 19 angebunden ist. Zum Liften der Fahrzeugachse 10 wird der Liftbalg 13 mit Druckluft beaufschlagt, wodurch der Liftbalg 13 an einem Abrollkolben 20 abrollt und damit seine Länge vergrößert. Da der Abrollkolben 20 fest mit dem Liftbalgträger 16 verbunden ist, liftet der Liftbalg 13 beim Vergrößern seiner Länge den am Liftbalg 13 angebrachten Halter 14 relativ zu den Rahmenträgern 17, 18, und 19. Die Fahrzeugachse 10 wird beim Liften durch einen Dreieckslenker 21 und zweier Längslenker 22 und 23 parallel zur Horizontalen geführt. Durch diese horizontale Ausrichtung der gelifteten Fahrzeugachse 10 ist ein unerwünschtes Einknicken des mit der Fahrzeugachse 10 verbundenen Liftbalges 13 zuverlässig ausgeschlossen, wodurch die Lebensdauer des Liftbalges 13 deutlich erhöht wird.

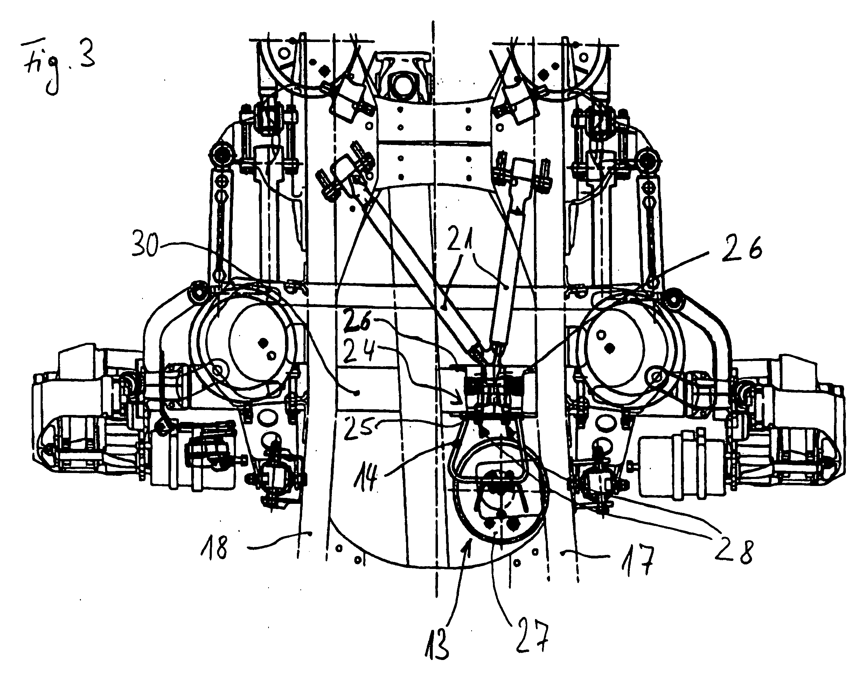

Fig. 3 zeigt eine Alternative zur Anbindung des Halters 14 an eine sehr stark gekröpfte Fahrzeugachse 30. Eine Befestigungseinrichtung 24 mit einer Befestigungsplatte 25 und Wangen 26 verbindet den Halter 14 mit der Fahrzeugachse 30. Die Wangen 26 umgreifen die Fahrzeugachse 30. Somit ist die Befestigungseinrichtung 24 formschlüssig mit der Fahrzeugachse 30 verbunden. Durch die formschlüssige Verbindung zwischen der Befestigungseinrichtung 24 und der Fahrzeugachse 30 können von dem Dreieckslenker 21 eingeleitete Querkräfte über die Befestigungseinrichtung 24 auf die Fahrzeugachse 30 übertragen werden. Der Halter 14 ist mittels Schrauben 28 mit der Befestigungsplatte 25 verbunden. Durch die Befestigungseinrichtung 24 ist der Dreieckslenker 21 am Halter 14 angelenkt. Somit übernimmt der Halter 14 bei dieser Variante zwei Funktionen. Zum einen verbindet er den oberen Bereich des Liftbalgs 13 mittels der runden Platte 27 mit der Fahrzeugachse 30. Außerdem dient der Halter 14 als Anlenkpunkt für den Dreieckslenker 21.

### Bezugszeichenliste

- 10: Fahrzeugachse
- 11: Kröpfung
- 12: Antriebswelle
- 13: Liftbalg
- 14: Halter
- 15: Verbindungselement
- 16: Liftbalgträger
- 17: Rahmenlängsträger
- 18: Rahmenlängsträger
- 19: Rahmenquerträger
- 20: Zylinder
- 21: Dreieckslenker
- 22: Längslenker
- 23: Längslenker
- 24: Befestigungseinrichtung
- 25: Befestigungsplatte
- 26: Wange
- 27: Platte
- 28: Schraube
- 30: Achse

## Patentansprüche

1. Vorrichtung zum Liften und Senken einer Fahrzeugachse (10, 30), insbesondere einer Vorlauf - oder einer Nachlaufachse von Nutzfahrzeugen wie LKW oder Bussen, die oben über einen Dreieckslenker (2) und unten über Längslenker (22) an einem Fahrzeugrahmen (17, 18, 19) angelenkt und mittels Federn und Stoßdämpfern gegenüber diesem abgestützt ist, wobei zum Liften und Senken der Fahrzeugachse (10, 30) ein Lilftbalg (13) vorgesehen ist, der unten an einem rahmenfesten Liftbalgträger (16) und oben mittelbar gegenüber der liftbaren Fahrzeugachse (10, 30) abgestützt ist, und wobei der Liftbalg (13) oben an einem an der liftbaren Fahrzeugachse (10,30) befestigten Halter (14) abgestützt ist, **dadurch gekennzeichnet, dass** der Halter (14) außermittig an der Fahrzeugachse (10, 30) angebunden ist, und dass der Dreieckslenker (21) am Halter (14) angelenkt ist, wobei der Halter (14) entweder einen Verbindungsarm (15) aufweist, mittels diesem er mit der liftbaren Fahrzeugachse (10) verbunden ist, oder dass der Halter (14) mittels einer an der liftbaren Fahrzeugachse (30) angebrachten Befestigungseinrichtung (24) mit der liftbaren Fahrzeugachse (30) verbunden ist.

2. Vorrichtung nach Anspruch 1, **dadurch gekennzeichnet, dass** die Befestigungseinrichtung (24) eine Befestigungsplatte (25) mit daran angebrachten Wagen (26) aufweist, wobei die Wangen (26) an der liftbaren Fahrzeugachse (30) anliegen.

3. Vorrichtung nach Anspruch 2, **dadurch gekennzeichnet, dass** die Wangen (26) die liftbare Fahrzeugachse (30) umgreifen.

4. Vorrichtung nach Anspruch 1, **dadurch gekennzeichnet, dass** der Halter (14) an der liftbaren Fahrzeugachse (10) abgeschweißt und/oder angeschraubt ist.

5. Vorrichtung nach einem der Ansprüche 1 oder 4, **dadurch gekennzeichnet, dass** der Halter (14) in Fahrtrichtung vor oder hinter der Fahrzeugachse (10, 30) angeordnet ist.

6. Vorrichtung nach Anspruch 1, **dadurch gekennzeichnet, dass** der Liftbalgträger (16) mit einem Stoßdämpfer kombiniert ist.

7. Vorrichtung nach einem der Ansprüche 1 bis 6, **dadurch gekennzeichnet, dass** der Halter (14) und/oder der Liftbalgträger (16) als eine Guss- oder als eine Schweißkonstruktion ausgeführt ist.

8. Vorrichtung nach einem oder mehreren der vorangegangen Ansprüche 1 bis 7, **dadurch gekennzeichnet, dass** die Fahrzeugachse (10, 30) eine gelenkte oder eine nicht gelenkte Fahrzeugachse ist.

## Claims

1. Device for raising and lowering a vehicle axle (10, 30), in particular a leading or trailing axle of commercial vehicles such as trucks or buses, which device is pivoted on a vehicle frame (17, 18, 19) at the top via a wishbone (2) and at the bottom via longitudinal arms (22) and braced against the frame by means of springs and shock absorbers, whereby a lifting bellows (13) is provided for raising and lowering the vehicle axle (10, 30), said lifting bellows (13) being braced at the bottom on a lifting bellows carrier (16) fixed to the frame and at the top indirectly in respect of the lifting vehicle axle (10, 30), the lifting bellows (13) being braced at the top on a bracket fastened to the lifting vehicle axle (10, 30), **characterised in that** the bracket (14) is attached off-centre to the vehicle axle (10, 30) and that the wishbone (21) is pivoted on the bracket (14), whereby the bracket (14) has either a connecting arm (15), by means of which it is linked to the lifting vehicle axle (10), or that the bracket (14) is linked to the lifting vehicle axle (30) by means of a mounting device (24) attached to the lifting vehicle axle (30).

2. Device as in Claim 1, **characterised in that** the mounting device (24) has a plate (25) with attached flanges (26), the flanges (26) being in contact with the lifting vehicle axle (30).

3. Device as in Claim 2, **characterised in that** the flanges (26) fit around the lifting vehicle axle (30).

4. Device as in Claim 1, **characterised in that** the bracket (14) is welded and/or bolted to the lifting vehicle axle (10).

5. Device as in Claim 1 or 4, **characterised in that** the bracket (14) is located in front of or behind the vehicle axle (10, 30) as seen in the direction of motion.

6. Device as in Claim 1, **characterised in that** the lifting bellows carrier (16) is combined with a shock absorber.

7. Device as in one of the Claims 1 to 6, **characterised in that** the bracket (14) and/or the lifting bellows carrier (16) is a cast or welded construction.

8. Device as in one or several of the foregoing claims 1 to 7, **characterised in that** the vehicle axle (10, 30) is a steered or a non-steered vehicle axle.

## Revendications

1. Dispositif pour relever et abaisser un essieu de véhicule (10, 30), en particulier un essieu poussé ou un essieu traîné de véhicules industriels tels que des camions ou des bus, qui est articulé, en haut, via un triangle de guidage (2) et, en bas, via des bras de guidage longitudinaux (22) sur un cadre de véhicule (17, 18, 19) et est en appui au moyen de ressorts et d'amortisseurs vis-à-vis de ce dernier, auquel cas un coussin pneumatique relevable (13) est prévu pour relever et abaisser l'essieu du véhicule (10, 30), ce coussin pneumatique étant en appui, en bas, sur un support de coussin pneumatique relevable (16) fixé sur le cadre et, en haut, indirectement vis-à-vis de l'essieu de véhicule relevable (10, 30), et auquel cas le coussin pneumatique relevable (13) est en appui en haut sur un support (14) fixé sur l'essieu de véhicule relevable (10, 30), **caractérisé en ce que** le support (14) est raccordé de manière excentrée sur l'essieu de véhicule (10, 30) et **en ce que** le triangle de guidage (21) est articulé sur le support (14), auquel cas le support (14) présente un bras de liaison (15) au moyen duquel il est relié à l'essieu de véhicule relevable (10) ou bien le support (14) est relié à l'essieu de véhicule relevable (30) au moyen d'un dispositif de fixation (24) logé sur l'essieu de véhicule relevable (30).

2. Dispositif selon la revendication 1, **caractérisé en ce que** le dispositif de fixation (24) présente une plaque de fixation (25) avec des joues mises en place dessus (26), auquel cas les joues reposent sur l'essieu de véhicule relevable (30).

3. Dispositif selon la revendication 2, **caractérisé en ce que** les joues (26) enveloppent l'essieu de véhicule relevable (30).

4. Dispositif selon la revendication 1, **caractérisé en ce que** le support (14) est soudé et/ou vissé sur l'essieu de véhicule relevable (10).

5. Dispositif selon la revendication 1 ou 4, **caractérisé en ce que** le support (14) est disposé dans le sens de la marche avant ou après l'essieu de véhicule (10, 30).

6. Dispositif selon la revendication 1, **caractérisé en ce que** le support de coussin pneumatique relevable (16) est combiné à un amortisseur.

7. Dispositif selon l'une des revendications 1 à 6, **caractérisé en ce que** le support (14) et/ou le support de coussin pneumatique relevable (16) est/sont formé(s) comme construction en fonte ou comme construction soudée.

8. Dispositif selon une ou plusieurs revendications 1 à 7 mentionnées précédemment, **caractérisé en ce que** l'essieu de véhicule (10, 30) est un essieu de véhicule directeur ou non directeur.
